# EUROPEAN PATENT APPLICATION

(11) **EP 2 322 977 A1**
(43) Date of publication of application: **18.05.2011**
(21) Application number: 09817597.9
(22) Date of filing: 21.08.2009
(51) Int. Cl.: G02F 1/1333, F21S 2/00, G02F 1/1345, G09F 9/00, H04N 5/66, F21Y 103/00

(54) **ELECTRONIC APPARATUS, ILLUMINATING DEVICE, DISPLAY DEVICE AND TELEVISION RECEIVER**

(30) Priority: 01.10.2008 JP 2008256156
(71) Applicant: Sharp Kabushiki Kaisha, Osaka-shi, Osaka 545-8522 (JP)
(72) Inventor: KUROMIZU, Yasumori, Osaka-shi Oska 545-8522 (JP)
(74) Representative: Müller-Boré & Partner Patentanwälte
(86) International application number: PCT/JP2009/064640
(87) International publication number: WO 2010/038560

(57) **Abstract**

A protection sheet (PS) deforms into a shape of protecting a metal terminal (11P) of an inverter transformer (11) exposed from a gap between an inverter substrate (12) and a backlight chassis (43) at a temperature below the deforming temperature. At a temperature above the deforming temperature, the protection sheet (PS) deforms into a shape of removing from the metal terminal (11P) of the inverter transformer (11) exposed from the gap between the inverter substrate (12) and the backlight chassis (43).

## Description

### Technical Field

The present invention relates to electronic apparatuses such as an illuminating device and a display device.

### Background Art

In a commonly-used electronic apparatus represented by, for example, a thin-screen display device such as a liquid crystal display device commercially available these days, an opening for removing heat accumulated inside is formed through its outer cover (housing). The opening described here has a size relatively small but sufficient for an insect (particularly, a larva thereof) such as a cockroach to enter therethrough.

Added to this, cockroaches (insect pests) prefer dark and moderately warm environments. Naturally, there is a possibility that a cockroach enters inside the display device and comes in contact with a high-voltage inverter circuit (driving circuit). Such a case might lead to a malfunction of the inverter circuit and eventually result in a malfunction of the display device. As a solution to this, one possible scheme to prevent the entry of a cockroach into the display device is, as described in, for example, Patent Document 1, to disperse a repellent that repels cockroaches by use of a blower fan.

### List of Citations

### Patent Literature

Patent Document 1: JP-A-2005-310520

### Summary of the Invention

### Technical Problem

With regard to the above-described scheme, however, even though repellents are highly effective in repelling cockroaches and virtually harmless to humans, some users feel uneasy about such a repellent being dispersed.

The present invention has been made to solve the above-described problem. It is an object of the present invention to provide an electronic apparatus and the like that are designed to prevent the entry of insect pests without causing mental discomfort to humans.

### Solution to the Problem

An electronic apparatus includes: a circuit board on which a driving circuit is mounted; and a chassis to which the circuit board is mounted. In the electronic apparatus, a thermally deformable sheet that is reversibly deformable depending on a temperature is interposed in a gap between the circuit board and the chassis. Under a first temperature state lower than a predetermined temperature, the thermally deformable sheet is deformed into such a shape as to protect part of the driving circuit, which is exposed to the gap between the circuit board and the chassis. On the other hand, under a second temperature state lower than the predetermined temperature, the thermally deformable sheet is deformed into such a shape as to be separated from the part of the driving circuit, which is exposed to the gap between the circuit board and the chassis.

One example of the thermally deformable sheet is as follows. That is, under the first temperature state, the thermally deformable sheet, while a ring-shaped region as part thereof remains as a foot portion, becomes bulged at an inner side portion of the ring-shaped foot portion and thus is deformed into a dome shape, so that the part of the driving circuit is protected by a top portion of the portion defining the dome shape. On the other hand, under the second temperature state, the thermally deformable sheet becomes shrunk at the bulged portion and thus is deformed into a planar shape, so that the top portion is separated from the part of the driving circuit.

Furthermore, another example of the thermally deformable sheet is as follows. That is, under the first temperature state, the thermally deformable sheet, while opposed fringe regions as part thereof remain as foot portions, becomes bowed at an inner side portion between the foot portions and thus is deformed into a semicircular columnar shape, so that the part of the driving circuit is protected by a top line portion that is a linear top portion of the portion defining the semicircular columnar shape. On the other hand, under the second temperature state, the thermally deformable sheet becomes flattened at the bowed portion and thus is deformed into a planar shape, so that the top line portion is separated from the part of the driving circuit.

With the thermally deformable sheet configured as above, under the first temperature state (for example, when the electronic apparatus is not operated and the gap between the circuit board and the chassis is at room temperature), the part of the driving circuit is protected by the thermally deformable sheet. This eliminates the possibility that a cockroach comes in contact with the part of the driving circuit. Hence, even when the electronic apparatus is operated and the driving circuit is started to be driven, in no case is a cockroach electrocuted under a voltage applied to the driving circuit. Thus, breakage of the driving circuit and eventually of the electronic apparatus due to a cockroach being, for example, electrocuted is prevented.

Furthermore, for example, when the electronic apparatus is operated and thus the driving circuit is driven, so that the gap between the circuit board and the chassis is brought to the second temperature state at a relatively high temperature, the part of the driving circuit is not covered by the protection sheet. Thus, even in such a case, the driving circuit is cooled by outside air. The driving circuit being driven is at too high a temperature for a cockroach to approach (in short, even though the driving circuit is not protected by the protection sheet, a cockroach will not approach the driving circuit).

The structure of the thermally deformable sheet is not particularly limited. For example, the thermally deformable sheet may be made of resin or may be formed by laminating resin to metal. The thermally deformable sheet may also be made of a laminate of two or more types of resin having different linear expansion coefficients.

Furthermore, for the purpose of increasing the freedom degree of deformation of the thermally deformable sheet, a front surface and a back surface of the thermally deformable sheet may be made different in area.

Furthermore, the color of the thermally deformable sheet is also not particularly limited, and the thermally deformable sheet may have a white, gray, or black color.

The electronic apparatus configured as above may be an illuminating device including a light source that emits light by using an electric current fed through the driving circuit. Furthermore, it can be said that a display device including the illuminating device and a display panel that is disposed so as to be able to receive output light of the illuminating device is also encompassed within the scope of the present invention (the display panel may be a liquid crystal panel formed by sealing in liquid crystal between a pair of substrates). Furthermore, it can be said that a television receiver including the above-described display device is also encompassed within the scope of the present invention.

### Advantageous Effects of the Invention

According to the present invention, immediately before the electronic apparatus is operated, the thermally deformable sheet protects the part of the driving circuit, which is exposed to the gap between the circuit board and the chassis inside the electronic apparatus. Thus, even when the electronic apparatus is operated and the driving circuit is started to be driven, in no case is a cockroach electrocuted under a voltage applied to the driving circuit, so that breakage of the driving circuit and eventually of the electronic apparatus is prevented.

### Brief Description of Drawings

[Fig. 1] is a cross-sectional view taken in the direction of arrows along a line A-A' of a liquid crystal display device (in an off-state) shown in Fig. 6.
[Fig. 2] is a cross-sectional view taken in the direction of the arrows along the line A-A' of the liquid crystal display device (in an on-state) shown in Fig. 6.
[Fig. 3] is an exploded perspective view showing an inverter board and a backlight chassis in the liquid crystal display device in the off-state shown in Fig. 1.
[Fig. 4] is an exploded perspective view showing the inverter board and the backlight chassis in the liquid crystal display device in the on-state shown in Fig. 2.
[Fig. 5] is a perspective view showing a rear surface of the backlight chassis.
[Fig. 6] is an exploded perspective view of the liquid crystal display device described in Embodiment 1.
[Fig. 7] is an exploded perspective view of an inverter board and a backlight chassis, which are shown in a disassembled state, in a liquid crystal display device (in an off-state) described in Embodiment 2.
[Fig. 8] is a cross-sectional view of a liquid crystal display device (in an off-state) described in Embodiment 3.
[Fig. 9] is a cross-sectional view of the liquid crystal display device (in an on-state) described in Embodiment 3.
[Fig. 10] is an exploded perspective view showing an inverter board and a protection sheet in the liquid crystal display device in the off-state shown in Fig. 8.
[Fig. 11] is an exploded perspective view showing the inverter board and the protection sheet in the liquid crystal display device in the on-state shown in Fig. 9.
[Fig. 12] is a perspective view showing a backlight chassis to which fluorescent tubes are mounted and an inverter board.
[Fig. 13] is a partially enlarged view showing the backlight chassis to which the fluorescent tubes are mounted and the inverter board, which are shown in Fig. 12.
[Fig. 14] is a perspective view of the backlight chassis shown in Fig. 12 as seen from the side of a rear surface.
[Fig. 15] is an exploded perspective view showing the backlight chassis and the inverter board shown in Fig. 13 in a state of being disassembled from each other.
[Fig. 16] is a perspective view showing only an on-board connector to be installed on the inverter board.
[Fig. 17] is a perspective view showing the backlight chassis, one of the fluorescent tubes, and a harnessless connector intended to hold the one of the fluorescent tubes.
[Fig. 18] is a perspective view mainly showing the backlight chassis and one of the harnessless connectors.
[Fig. 19] is a perspective view showing a process in which the harnessless connector is fitted to the on-board connector.

### Description of Embodiments

### [Embodiment 1]

The following describes one embodiment with reference to the appended drawings. In some of the drawings, hatching, reference signs of members, and the like may be omitted for the sake of convenience, in which case reference should be made to the other drawings. Furthermore, in the drawings, a solid circle indicates a direction perpendicular to the plane of the drawings.

In the following description, a liquid crystal display device that is a display device is used as one example of the electronic apparatus. The electronic apparatus, however, is not limited to a liquid crystal display device and may also be any of home electric appliances including other types of display devices, an illuminating device, an audio device, and a cooking device. Furthermore, in a case of a display device that displays images based on radio waves required for television broadcasting, an electronic apparatus including the display device is referred to also as a television receiver.

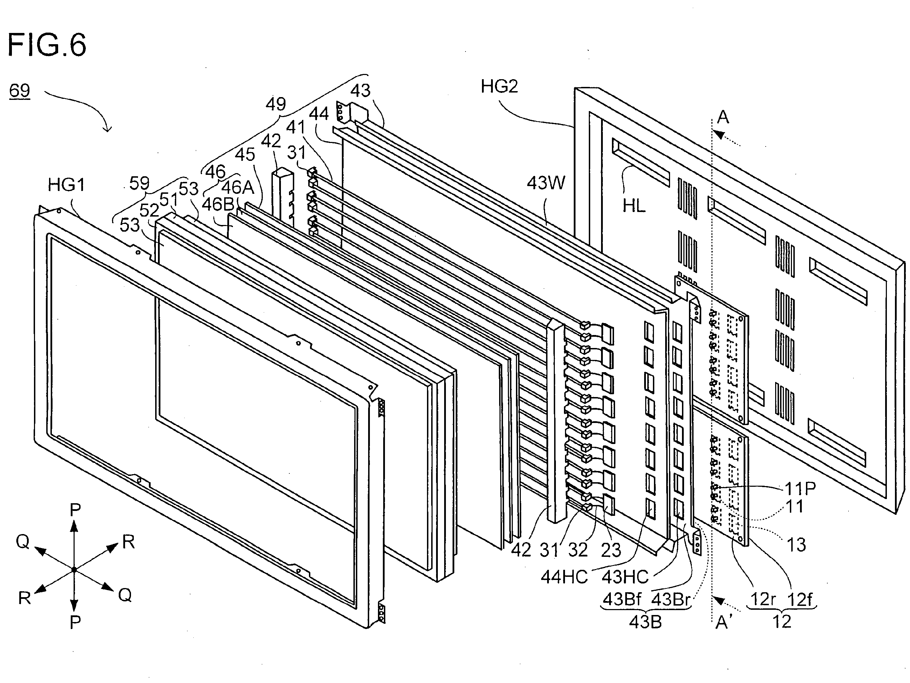

Fig. 6 is an exploded perspective view of a liquid crystal display device 69. As shown in this figure, the liquid crystal display device 69 includes a liquid crystal display panel 59, a backlight unit (electronic apparatus, illuminating device) 49, and a housing HG (front housing HG1 · back housing HG2) that houses the liquid crystal display panel 59 and the backlight unit 49.

The liquid crystal display panel 59 is formed by laminating an active matrix substrate 51 including an unshown switching element such as a TFT (thin film transistor) to an opposed substrate 52 opposed to the active matrix substrate 51 by use of a sealing material (not shown). Further, liquid crystal (not shown) is injected into clearance between these substrates 51 · 52 (polarization films 53 · 53 are attached so as to sandwich the active matrix substrate 51 and the opposed substrate 52 therebetween).

Being a non-light-emitting type display panel, the liquid crystal display panel 59 receives light (backlight light) from the backlight unit 49 and thereby fulfills a display function. Hence, allowing the entire surface of the liquid crystal display panel 59 to be irradiated uniformly with light from the backlight unit 49 improves display quality of the liquid crystal display panel 59.

The backlight unit 49 includes a fluorescent tube (light source, linear light source) 41, a lamp holder 42, a backlight chassis (chassis) 43, a reflection sheet 44, a diffusion sheet 45, and lens sheets 46 (46A · 46B).

The fluorescent tube 41 has a linear shape (rod shape, columnar shape, or the like), and a plurality of the fluorescent tubes 41 are mounted in the backlight unit 49 (for the sake of convenience, only some of the fluorescent tubes 41 are shown in the figure). An electrode (not shown) of the fluorescent tube 41 is held by a socket 31, and a harness 32 for receiving electric current supply extends out from the socket 31.

The lamp holder 42 is a block-shaped member used in a pair to hold the fluorescent tube 41. To be more specific, one of the pair of the lamp holders 42 supports one of both ends of the fluorescent tube 41 and the other of the pair of the lamp holders 42 supports the other of the ends of the fluorescent tube 41 so that the fluorescent tube 41 is mounted in the backlight unit 49. Furthermore, for the purpose of more stably mounting the fluorescent tube 41 in the backlight unit 49, a lamp clip (not shown) intended to grasp the fluorescent tube 41 may be included.

The type of the fluorescent tube 41 is not limited, and the fluorescent tube 41 may be, for example, a cold-cathode tube or a hot-cathode tube. Furthermore, in the following description, a direction in which the fluorescent tubes 41 are arranged in parallel (direction in which the fluorescent tubes 41 are aligned) is indicated as a P direction, a direction in which the fluorescent tubes 41 extend is indicated as a Q direction, and a direction perpendicular to both of the P direction and the Q direction is indicated as an R direction.

The backlight chassis 43 is a box-shaped housing body including a bottom portion 43B and a wall portion 43W standing up from the bottom portion 43B. The backlight chassis 43 houses various members including the fluorescent tube 41 and the like (the fluorescent tubes 41 are laid so as to cover the bottom portion 43B of the backlight chassis 43; a surface of the bottom portion 43B, which faces the fluorescent tubes 41, is referred to as a front surface 43Bf, and a back side of the front surface 43Bf is referred to as a rear surface 43Br).

The reflection sheet 44 is a reflection member that covers the front surface 43Bf of the bottom portion 43B of the backlight chassis 43 and accordingly, is covered by the plurality of the fluorescent tubes 41. The reflection sheet 44 therefore reflects light of the fluorescent tubes 41. To be more specific, the reflection sheet 44 reflects part of radiant light emitted from the fluorescent tubes 41 (radiant light emitted around each of the fluorescent tubes 41) and guides it to the diffusion sheet 45.

The backlight chassis 43 may be formed using a member that itself is made of resin, metal, or the like of a type having a reflection function. The reason for this is that in such a case, the reflection sheet 44 can be omitted.

The diffusion sheet 45 is positioned so as to cover the florescent tubes 41 arranged in parallel and diffuses light from the fluorescent tubes 41 so that the light is spread over the entire region of the liquid crystal display panel 59 (the diffusion sheet 45 and the lens sheets 46A · 46B are also referred to collectively as an optical sheet group).

The lens sheet 46A is an optical sheet that has, for example, a prism shape in the plane thereof and narrows the directivity of light, and is positioned so as to cover the diffusion sheet 45. The lens sheet 46A therefore condenses light traveling from the diffusion sheet 45, and thus improved luminance is obtained.

The lens sheet 46B is positioned so as to cover the lens sheet 46A, and is an optical sheet that transmits therethrough a polarized light component polarized in one direction and reflects a polarized light component polarized orthogonally to the polarized light component that is transmitted. The lens sheet 46B also reflects a polarized light component absorbed by the polarization film 43 thereby to reuse it, and thus luminance on the liquid crystal display panel 59 is improved.

In the backlight unit 49 configured as above, light from the fluorescent tubes 41 arranged in parallel reaches the diffusion sheet 45 directly or after being reflected by the reflection sheet 44. The light that has reached the diffusion sheet 45 then passes through the lens sheets 46A · 46B while being diffused and thus is emitted as backlight light having increased light emission luminance. The backlight light then reaches the liquid crystal display panel 59, and thus the liquid crystal display panel 59 displays an image.

The front housing HG1 and the back housing HG2 constituting the housing HG sandwich therebetween the backlight unit 49 and the liquid crystal display panel 59 covering the backlight unit 49, which are configured as above, and thus fix them (there is no particular limitation on how they are fixed). That is, the front housing HG1, together with the back housing HG2, sandwiches the backlight unit 49 and the liquid crystal display panel 59, and thus the liquid crystal display device 69 is completed.

Now, with reference to Fig. 6 and Figs. 1 to 5, the following describes in detail the fluorescent tube 41, an inverter circuit used to drive the fluorescent tube 41, and an inverter board 12 on which the inverter circuit is mounted.

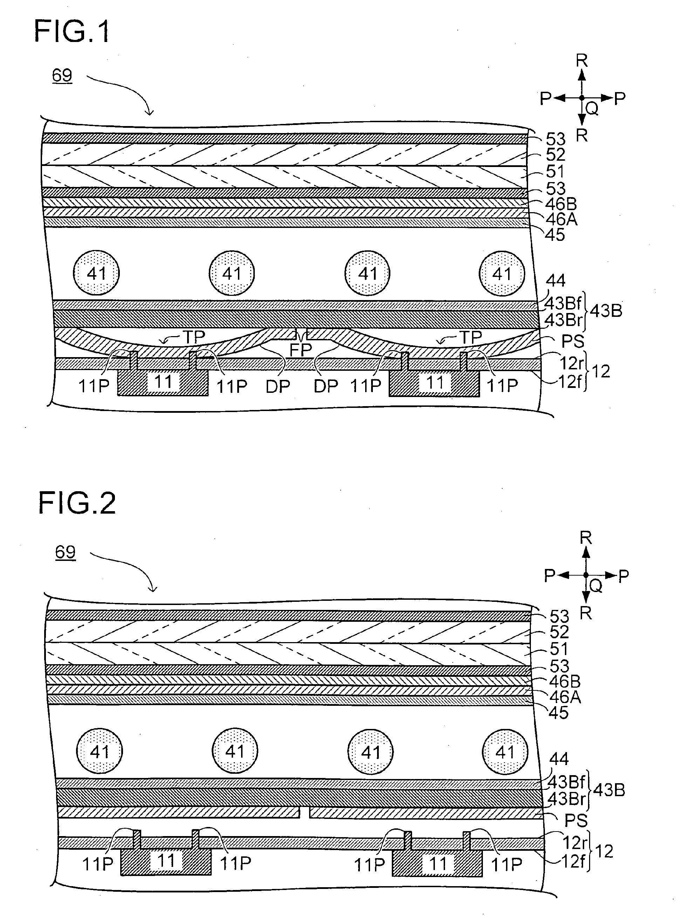

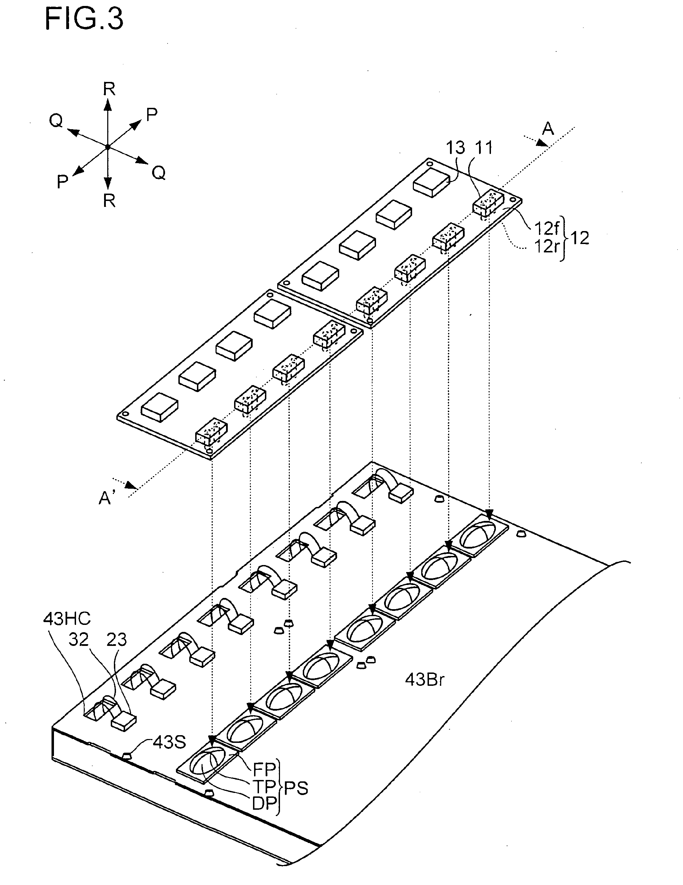

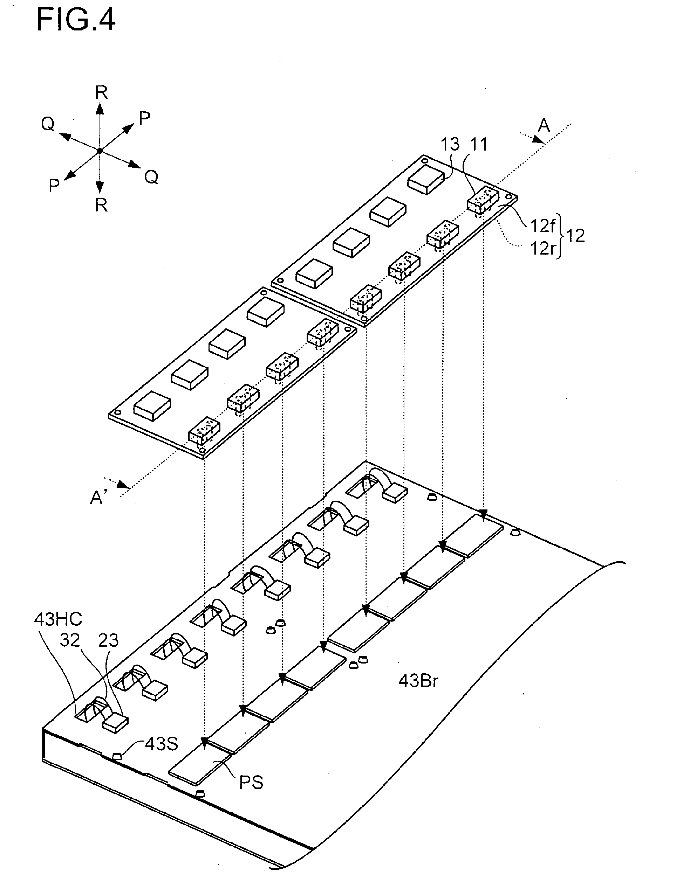

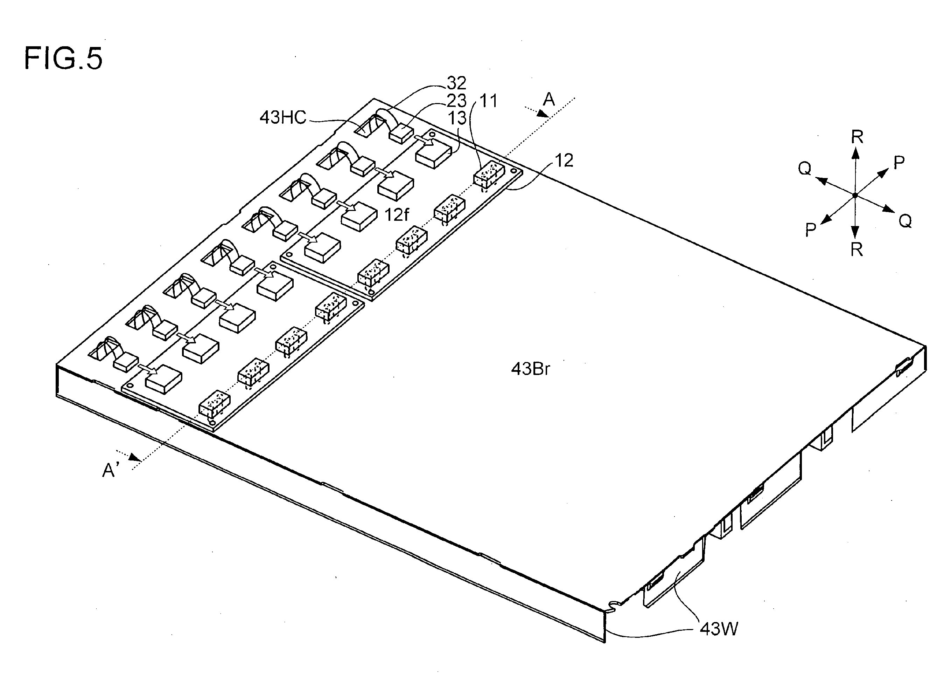

Fig. 5 is a perspective view of the backlight chassis 43 in the liquid crystal display device 69 as seen from the side of the rear surface 43Br (the figure mainly shows the backlight chassis 43 and the inverter board 12). Figs. 3 and 4 are exploded perspective views showing the inverter board 12 and the backlight chassis 43 in Fig. 5, where Fig. 3 shows the liquid crystal display device 69 in an off-state and Fig. 4 shows the liquid crystal display device 69 in an on-state. Furthermore, Figs. 1 and 2 are cross-sectional views taken in the direction of arrows along a line A-A' in the liquid crystal display device 69 shown in Fig. 6, where Fig. 1 corresponds to Fig. 3 and Fig. 2 corresponds to Fig. 4 (for the sake of convenience, the line A-A' is shown also in each of Figs. 3 to 5).

The fluorescent tube 41 is driven using an alternating current supplied from the inverter circuit. The inverter circuit is composed of various circuits such as a booster circuit (inverter transformer) 11, and these circuits are mounted on the inverter board (circuit board) 12 (for the sake of convenience, Figs. 3 and 4 mainly show the inverter transformer 11 in the inverter circuit).

An electrical connection between the inverter circuit and the fluorescent tube 41 is established by fitting between an on-board connector 13 installed on the inverter board 12 and a harness connection connector 23 to which two harnesses 32 each extending out from the socket 31 are connected.

The on-board connector 13 is an electrical connection portion with respect to the inverter circuit and is connected to the inverter circuit via unshown board wiring (wiring disposed on the inverter board 12). Furthermore, the on-board connector 13 is installed on an exposed board surface 12f that is a surface of the inverter board 12, on which the inverter transformer (driving circuit) 11 is also installed (a back side of the exposed board surface 12f is referred to as a back board surface 12r).

The rear surface 43Br of the backlight chassis 43 is opposed to the back board surface 12r of the inverter board 12. Part of the bottom portion 43B of the backlight chassis 43 is made to protrude toward the inverter board 12 and thus forms a boss 43S (see Figs. 3 and 4). A screw (not shown) is screwed into the boss 43S from the side of the exposed board surface 12f of the inverter board 12, and thus the inverter board 12 is mounted to the backlight chassis 43.

At this time, the inverter board 12 and the backlight chassis 43 are separated from each other depending on the total length of the boss 43S, so that a gap is formed therebetween (see Figs. 1 and 2). The number of the bosses 43S used and the position of the boss 43S are not particularly limited. Furthermore, a metal terminal 11P of the inverter transformer 11 is exposed on the back board surface 12r of the inverter board 12.

The harness connection connector 23 is an electrical connection portion with respect to every two fluorescent tubes 41 and is connected to the every two fluorescent tubes 41 via two harnesses 32 and two sockets 31. Furthermore, as shown in Fig. 6, the harness connection connector 23 is routed from the front surface 43Bf to the rear surface 43Br of the backlight chassis 43 via a sheet aperture 44HC for a connector, which is formed through the reflection sheet 44, and a chassis aperture 43HC for a connector, which is formed through the backlight chassis 43.

As shown by a hollow arrow in Fig. 5, the harness connection connector 23 positioned on the side of the rear surface 43Br of the backlight chassis 43 is moved toward the on-board connector 13 on the inverter board 12 and is fitted thereto. An alternating current from the inverter circuit thus flows to the fluorescent tube 41 via the board wiring (not shown), the on-board connector 13, the harness connection connector 23, the harness 32, and the socket 31. As a result, the fluorescent tube 41 is driven using the alternating current.

In a case where the fluorescent tube 41 is driven (to emit light) in the above-described manner, an alternating-current voltage of several kilovolts (about 1 KV to 2 KV) is applied to the inverter transformer 11. Because of this, the metal terminal 11P of the inverter transformer 11 is also placed under a high voltage, and moreover, the inverter transformer 11 itself takes on heat (the inverter transformer 11 generates heat and reaches a temperature of about 80°C). It can therefore be said that coming in contact with the inverter transformer 11 is dangerous.

Under normal circumstances, there is no possibility that a human comes in contact with the inverter transformer 11 being driven in the liquid crystal display device 69 as a commercialized product. There is, however, a possibility that an insect (insect pest) such as a cockroach enters inside the liquid crystal display device 69 through a minute opening HL of the housing HG (see Fig. 6). In particular, the gap (gap of about 5 mm) between the inverter board 12 and the backlight chassis 43 provides a dark and moderately warm environment, so that it is relatively likely that a cockroach enters the gap.

If a cockroach comes in contact with the metal terminal 11P of the inverter transformer 11 exposed to the above-described gap between the inverter board 12 and the backlight chassis 43, the cockroach is electrocuted, which might lead to a malfunction of the inverter transformer 11 (and eventually of the inverter circuit). As a solution to this, a protection sheet PS for preventing contact between the inverter transformer 11 and a cockroach is interposed in the gap between the inverter board 12 (specifically, the back board surface 12r) and the backlight chassis 43 (specifically, the rear surface 43Br).

The protection sheet PS is a thermally deformable sheet that is reversibly deformable depending on a temperature (the protection sheet PS is a sheet made of, for example, polycarbonate, polyethylene terephthalate, or an acrylic resin).

Furthermore, under a temperature state (first temperature state) lower than a designed deformation temperature (predetermined temperature), for example, under room temperature, the protection sheet PS is deformed into a shape including a dome portion DP (a portion corresponding to the foot of the dome portion DP is referred to as a foot portion FP). On the other hand, under a temperature state (second temperature state) higher than the deformation temperature, the protection sheet PS is deformed into a planar shape (the deformation temperature can be changed as appropriate by changing a material, processing techniques, or the like).

The above-described deformation is enabled by controlling the processing temperature used at the time of forming the protection sheet PS. To be more specific, in processing opposed surfaces of the protection sheet PS, these surfaces are subjected to different temperatures, which makes one of the surfaces processed at a low temperature tend to contract and the other of the surfaces processed at a high temperature tend to expand (in short, the one of the surfaces undergoes a different degree of thermal expansion from that of the other of the surfaces, so that it becomes likely that in the temperature state higher than the deformation temperature, the protection sheet PS is deformed).

In view of the above, at the time of forming the protection sheet PS, one of the surfaces of the protection sheet PS, which faces the inverter transformer 11, is formed at a low temperature, and the other of the surfaces of the protection sheet PS, which faces the bottom portion 43B of the backlight chassis 43, is formed at a high temperature, whereby the protection sheet PS is so designed that in the temperature state higher than the deformation temperature, a portion of the protection sheet PS, which forms a dome shape in the temperature state lower than the deformation temperature, is deformed into a planar shape.

As shown in Figs. 1 to 4, the protection sheet (thermally deformable sheet) PS designed as above is attached to the rear surface 43Br of the backlight chassis 43 while being opposed to the inverter transformer 11 (there is no particular limitation on how it is attached). To be more specific, the protection sheet PS is attached so that a top portion TP of the dome portion DP is placed away from the rear surface 43Br of the backlight chassis 43.

In this case, as shown in Figs. 1 and 3, if the dome portion DP has a height longer than the gap between the inverter board 12 and the backlight chassis 43, the metal terminal 11 P of the inverter transformer 11 is pressed by the top portion TP of the dome portion DP.

Hence, during a time period in which the temperature state lower than the deformation temperature is reached, for example, a time period in which the liquid crystal display device 69 is in the off-state, the metal terminal 11P is covered by the protection sheet PS. Thus, even if a cockroach enters the gap between the inverter board 12 and the backlight chassis 43 and attempts to approach the inverter transformer 11, the cockroach is blocked from reaching the inverter transformer 11 by the protection sheet PS.

Moreover, in a case where the liquid crystal display device 69 is turned on, even when the inverter transformer 11 thus is driven, the cockroach has not been approached the inverter transformer 11, and thus in no case is the cockroach electrocuted to become charred. As a result, in a case where the liquid crystal display device 69 is turned on, breakage of the inverter transformer 11 is prevented (eventually, breakage of the inverter circuit, the backlight unit 49, and the liquid crystal display device 69 is prevented).

Meanwhile, when the liquid crystal display device 69 is turned on, and thus the fluorescent tube 41 and the inverter transformer 11 generate heat to gradually heat the gap between the inverter board 12 and the backlight chassis 43, the vicinity of the protection sheet PS is brought to the temperature state higher than the deformation temperature. At this time, as shown in Figs. 2 and 4, the protection sheet PS becomes shrunk at the bulged dome portion DP and thus is deformed into a planar shape. That is, in the protection sheet PS, the top portion TP of the dome portion DP becomes separated from the metal terminal 11P of the inverter transformer 11, and the protection sheet PS thus adheres to the rear surface 43Br of the backlight chassis 43.

Hence, the inverter transformer 11 is not covered by the protection sheet PS, and a gap between a portion of the inverter board 12, which is immediately below the inverter transformer 11, and the backlight chassis 43 is opened to the air. Thus, even in a case where the inverter transformer 11 takes on heat, the inverter transformer 11 is cooled by outside air (the inverter transformer 11 being driven is at too high a temperature for a cockroach to approach).

Furthermore, when the liquid crystal display device 69 is brought from the on-state to the off-state, the florescent tube 41 and the inverter transformer 11 are deactivated, so that the temperature in the gap between the inverter board 12 and the backlight chassis 43 gradually decreases to reach the temperature state lower than the deformation temperature. At this time, as shown in Figs. 1 and 3, the protection sheet PS becomes bulged at an inner side portion of the ring-shaped foot portion FP and thus is deformed into a dome shape. The protection sheet PS thus covers the inverter transformer 11 by the top portion TP of the dome portion DP.

Based on the above, under the temperature state lower than the deformation temperature, the protection sheet PS is deformed into such a shape as to protect the metal terminal 11P of the inverter transformer 11, which is exposed to the gap between the inverter board 12 and the backlight chassis 43. To be more specific, the protection sheet PS, while a ring-shaped region as part thereof remains as the foot portion FP, becomes bulged at an inner side portion of the ring-shaped foot portion FP and thus is deformed into a dome shape, so that the metal terminal 11P as part of the inverter transformer 11 is protected by the top portion TP of the dome portion DP defining the dome shape.

On the other hand, under the temperature state higher than the deformation temperature, the protection sheet PS is deformed into such a shape as to be separated from the metal terminal 11P of the inverter transformer 11, which is exposed to the gap between the inverter board 12 and the backlight chassis 43. To be more specific, the protection sheet PS becomes shrunk at the bulged portion (namely, the dome portion DP) and thus is deformed into a planar shape, so that the top portion TP is separated from the metal terminal 11P.

Hence, immediately before the electronic apparatus is operated, the protection sheet PS protects the inverter transformer 11 exposed to the gap between the inverter board 12 and the backlight chassis 43 in the backlight unit 49 (accordingly, in the liquid crystal display device 69). Thus, even when the liquid crystal display device 69 is operated and the inverter transformer 11 is started to be driven, in no case is a cockroach electrocuted under a voltage applied to the inverter transformer 11, so that breakage of the inverter transformer 11 and the like is prevented.

In addition, the protection sheet PS merely emits light harmless to humans. Thus, even when included in the backlight unit 49 (accordingly, in the liquid crystal display device 69) in order to prevent the entry of insect pests, the protection sheet PS causes no mental discomfort to a user.

Furthermore, in a case where the liquid crystal display device 69 is in the on-state, the protection sheet PS is separated from the metal terminal 11P of the inverter transformer 11 (see Figs. 2 and 4). This makes it likely that the metal terminal 11P is exposed to outside air and thus is cooled.

### [Embodiment 2]

The description is now directed to Embodiment 2. In the following description, like reference signs denote members having similar functions to those of the members used in Embodiment 1, and duplicate descriptions thereof are omitted.

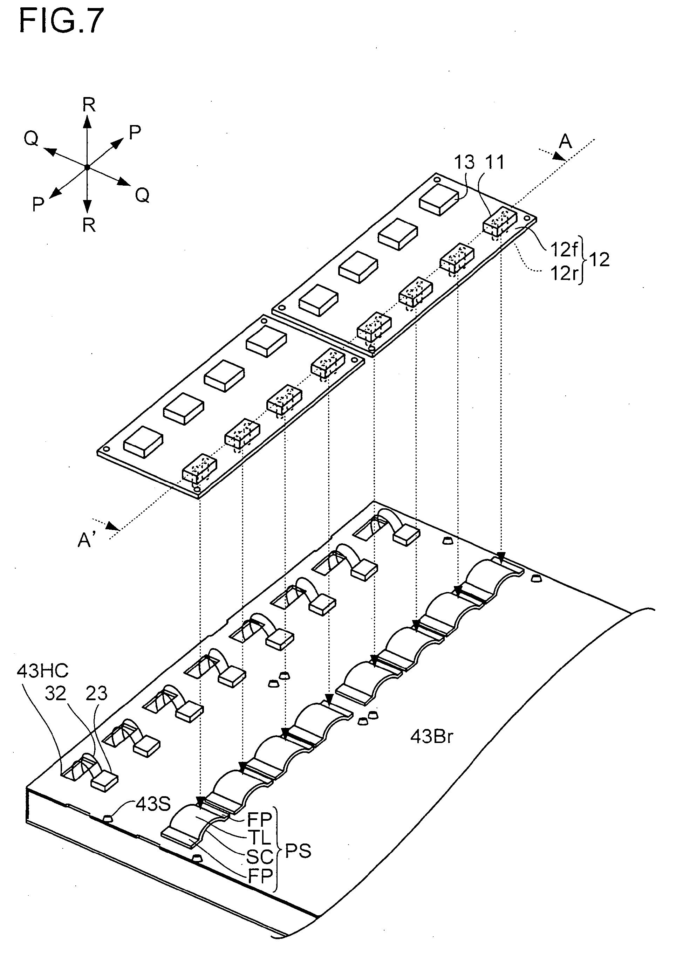

The protection sheet PS described in Embodiment 1 may vary greatly in shape. Another example thereof is a protection sheet PS (also referred to differently as a roof tile-shaped protection sheet PS or a semicylindrical protection sheet PS) including a semicircular columnar portion SC, which is shown in Fig. 7. Fig. 7 mainly shows an inverter board 12 and a backlight chassis 43 in a liquid crystal display device 69 in an off-state. In a case where the liquid crystal display device 69 is in an on-state, namely, under a temperature state higher than a deformation temperature, similarly to the case shown in Fig. 4, the protection sheet PS including the semicircular columnar portion SC is deformed into a planar shape.

Furthermore, when Fig. 7 (see a line A-A') and Fig. 4 are shown in cross section taken in the same direction as the cross-sectional direction in Fig. 6, the protection sheet PS including the semicircular columnar portion SC has a cross section substantially similar to that of the protection sheet PS including the dome portion DP shown in Figs. 1 and 2.

That is, under a temperature state lower than the deformation temperature, for example, under room temperature, the protection sheet PS is deformed into a shape including the semicircular columnar portion SC (opposed fringe regions corresponding to the foots of the semicircular columnar portion SC are each referred to as a foot portion FP), whereas under the temperature state higher than the deformation temperature, the protection sheet PS is deformed into a planar shape. Similarly to Embodiment 1, the above-described deformation is enabled by controlling the processing temperature used at the time of forming the protection sheet PS.

That is, at the time of forming the protection sheet PS, one of surfaces of the protection sheet PS, which faces an inverter transformer 11, is formed at a low temperature, and the other of the surfaces of the protection sheet PS, which faces a bottom portion 43 of the backlight chassis 43, is formed at a high temperature, whereby the protection sheet PS is so designed that in the temperature state higher than the deformation temperature, a portion of the protection sheet PS, which forms a semicircular columnar shape in the temperature state lower than the deformation temperature, is deformed into a planar shape.

The protection sheet PS designed as above is attached to a rear surface 43Br of the backlight chassis 43 while being opposed to the inverter transformer 11, and in particular, it is attached so that a top line portion TL (a ridge line portion of the semicircular portion SC, which is farthest from the foot portion FP) that is a linear top portion of the semicircular columnar portion SC is placed away from the rear surface 43Br of the backlight chassis 43. In this case, if the semicircular columnar portion SC has a height longer than a gap between the inverter board 12 and the backlight chassis 43, a metal terminal 11P of the inverter transformer 11 is pressed by the top line portion TL of the semicircular columnar portion SC.

Hence, similarly to Embodiment 1, during a time period in which the liquid crystal display device 69 is in the off-state, the metal terminal 11P is covered by the protection sheet PS. Thus, even if a cockroach enters the gap between the inverter board 12 and the backlight chassis 43 and attempts to approach the inverter transformer 11, the cockroach is blocked from reaching the inverter transformer 11 by the protection sheet PS. Consequently, even when the liquid crystal display device 69 is operated and the inverter transformer 11 is started to be driven, in no case is the cockroach electrocuted under a voltage applied to the inverter transformer 11, so that breakage of the inverter transformer 11 and the like is prevented.

Furthermore, when the liquid crystal display device 69 is turned on, and thus a fluorescent tube 41 and the inverter transformer 11 generate heat to gradually heat the gap between the inverter board 12 and the backlight chassis 43, the vicinity of the protection sheet PS is brought to the temperature state higher than the deformation temperature. At this time, the protection sheet PS becomes flattened at the bowed semicircular columnar portion SC and thus is deformed into a planar shape. That is, in the protection sheet PS, the top line portion TL of the semicircular columnar portion SC becomes separated from the metal terminal 11P of the inverter transformer 11, and the protection sheet PS thus adheres to the rear surface 43Br of the backlight chassis 43.

Hence, similarly to Embodiment 1, the inverter transformer 11 is not covered by the protection sheet PS, and a gap between a portion of the inverter board 12, which is immediately below the inverter transformer 11, and the backlight chassis 43 is opened to the air. Thus, even in a case where the inverter transformer 11 takes on heat, the inverter transformer 11 is cooled by outside air (the inverter transformer 11 being driven is at too high a temperature for a cockroach to approach).

Moreover, when the liquid crystal display device 69 is brought from the on-state to the off-state, and the fluorescent tube 41 and the inverter transformer 11 are deactivated, the temperature in the gap between the inverter board 12 and the backlight chassis 43 gradually decreases to reach the temperature state lower than the deformation temperature. Because of this, the protection sheet PS becomes bowed at an inner side portion of the opposed foot portions FP and thus is deformed into a semicircular columnar shape. The protection sheet PS thus covers the inverter transformer 11 by the top line portion TL of the dome portion DP.

Based on the above, the protection sheet PS of Embodiment 2 also provides similar effects to the effects of Embodiment 1.

That is, in a case where the liquid crystal display device 69 is in the off-state, in the gap between the inverter board 12 and the backlight chassis 43, in no case can a cockroach approach the metal terminal 11P (see Figs. 7 and 1). Thus, even when the liquid crystal display device 69 is brought to the on-state, the inverter transformer 11 is prevented from malfunctioning due to a cockroach coming in contact with the metal terminal 11P of the inverter transformer 11. Furthermore, in a case where the liquid crystal display device 69 is in the on-state, the protection sheet PS is separated from the metal terminal 11P of the inverter transformer 11 (see Figs. 4 and 2). This makes it likely that the metal terminal 11P is exposed to outside air and thus is cooled.

### [Embodiment 3]

The description is now directed to Embodiment 3. In the following description, like reference signs denote members having similar functions to those of the members used in Embodiments 1 · 2, and duplicate descriptions thereof are omitted.

For example, in Embodiment 1, the protection sheet PS is attached to the rear surface 43Br of the backlight chassis 43 while being opposed to the inverter transformer 11, and in particular, it is attached so that the top portion TP of the dome portion DP is placed away from the rear surface 43Br of the backlight chassis 43. Furthermore, in Embodiment 2, the protection sheet PS is attached to the rear surface 43Br of the backlight chassis 43 while being opposed to the inverter transformer 11, and in particular, it is attached so that the top line portion TL of the semicircular columnar portion SC is placed away from the rear surface 43Br of the backlight chassis 43.

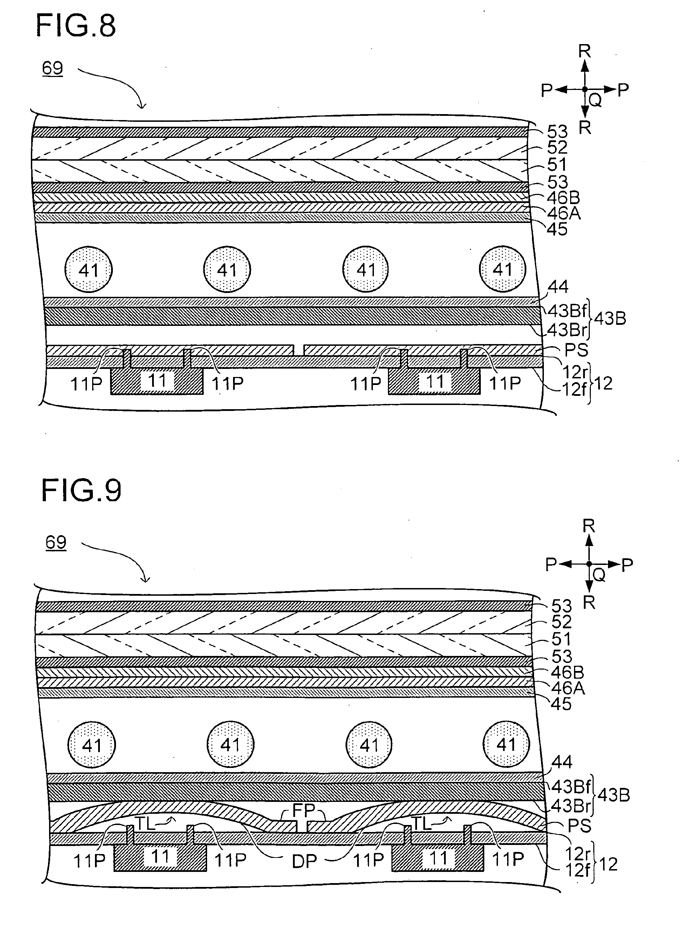

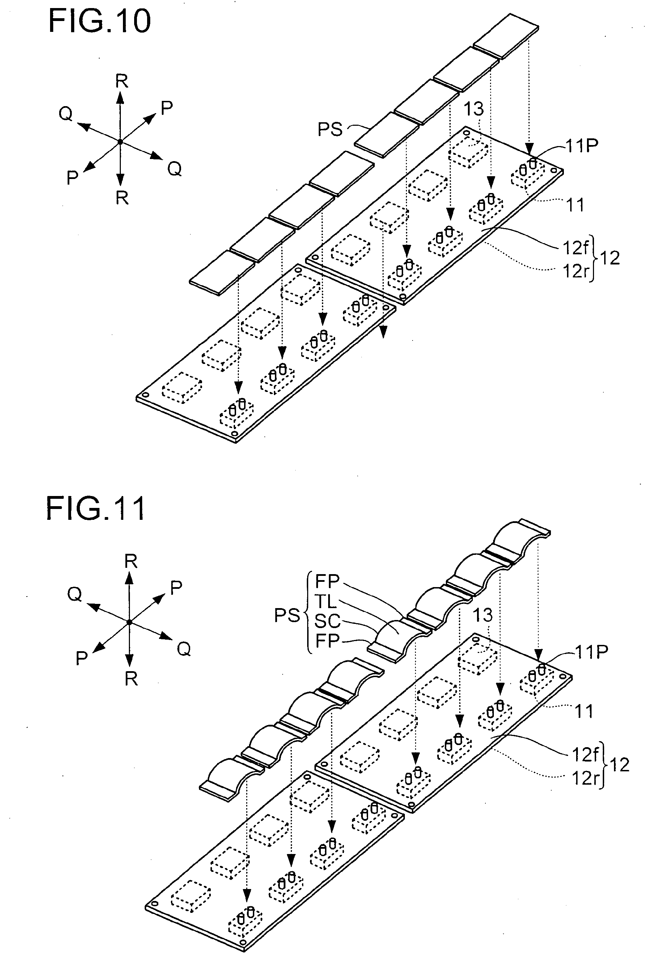

How the protection sheet PS is attached, however, is not limited thereto. For example, a protection sheet PS may be attached instead to an inverter board 12 as shown in Fig. 8 showing a liquid crystal display device 69 in an off-state and in Fig. 9 showing the liquid crystal display device 69 in an on-state. In these figures, the liquid crystal display device 69 is shown in a similar manner to Figs. 1 and 2, respectively, and the protection sheet PS deformable into a semicircular columnar shape is used as one example. Furthermore, Figs. 10 and 11 show extractive perspective views of the inverter board 12 and the protection sheet PS, which correspond to Figs. 8 and 9, respectively.

The protection sheet PS shown in Figs 8 to 11 may be configured as follows. That is, in a case of a temperature state lower than a deformation temperature, the protection sheet PS is deformed into a planar shape so as to cover and thus protect a metal terminal 11P of an inverter transformer 11, whereas in a case of a temperature state higher than the deformation temperature, the protection sheet PS is deformed into such a shape (for example, a semicircular columnar shape or a dome shape) as to be separated from the metal terminal 11P of the inverter transformer 11 and yet surround and thus protect the metal terminal 11.

The protection sheet PS described above is designed and formed as follows. That is, at the time of forming the protection sheet PS, one of surfaces of the protection sheet PS, which faces the inverter transformer 11, is formed at a high temperature, and the other of the surfaces of the protection sheet PS, which faces a bottom portion 43Br of a backlight chassis 43, is formed at a low temperature, whereby the protection sheet PS is so designed that in the temperature state higher than the deformation temperature, a portion of the protection sheet PS, which forms a planar shape in the temperature state lower than the deformation temperature, is deformed into a semicircular columnar shape.

As shown in Figs. 8 and 10, during a time period in which the liquid crystal display device 69 is in the off-state, the protection sheet PS described above is deformed into a planar shape so as to cover the metal terminal 11P, thereby blocking a cockroach from approaching the metal terminal 11P. That is, similarly to Embodiments 1 · 2, in a state where the liquid crystal display device 69 is turned on, breakage of the inverter transformer 11 is prevented.

Furthermore, when the liquid crystal display device 69 is turned on, and thus a fluorescent tube 41 and the inverter transformer 11 generate heat to gradually heat a gap between the inverter board 12 and the backlight chassis 43, the vicinity of the protection sheet PS is brought to the temperature state higher than the deformation temperature. At this time, as shown in Figs. 9 and 11, the protection sheet PS becomes bowed at an inner side portion of opposed foot portions FP and thus is deformed into a semicircular columnar shape. Thus, in the protection sheet PS, a portion thereof covering the metal terminal 11P of the inverter transformer 11 becomes separated from the metal terminal 11P.

Hence, the inverter transformer 11 is not covered by the protection sheet PS, and a gap between a portion of the inverter board 12, which is immediately below the inverter transformer 11, and the backlight chassis 43 is opened to the air. Thus, even in a case where the inverter transformer 11 takes on heat, the inverter transformer 11 is cooled by outside air (the inverter transformer 11 being driven is at too high a temperature for a cockroach to approach).

Moreover, when the liquid crystal display device 69 is brought from the on-state to the off-state, and the fluorescent tube 41 and the inverter transformer 11 are deactivated, the temperature in the gap between the inverter board 12 and the backlight chassis 43 gradually decreases to reach the temperature state lower than the deformation temperature. Because of this, as shown in Figs. 8 and 10, the protection sheet PS becomes flattened at a bulged semicircular columnar portion SC and thus is deformed into a planar shape.

Based on the above, the protection sheet PS described above also provides similar effects to the effects of Embodiments 1 · 2. Needless to say, the protection sheet PS deformable into a dome shape may also be used instead of the protection sheet PS deformable into a semicircular columnar shape used in Embodiment 3.

### [Embodiment 4]

The description is now directed to Embodiment 4. In the following description, like reference signs denote members having similar functions to those of the members used in Embodiments 1 to 3, and duplicate descriptions thereof are omitted.

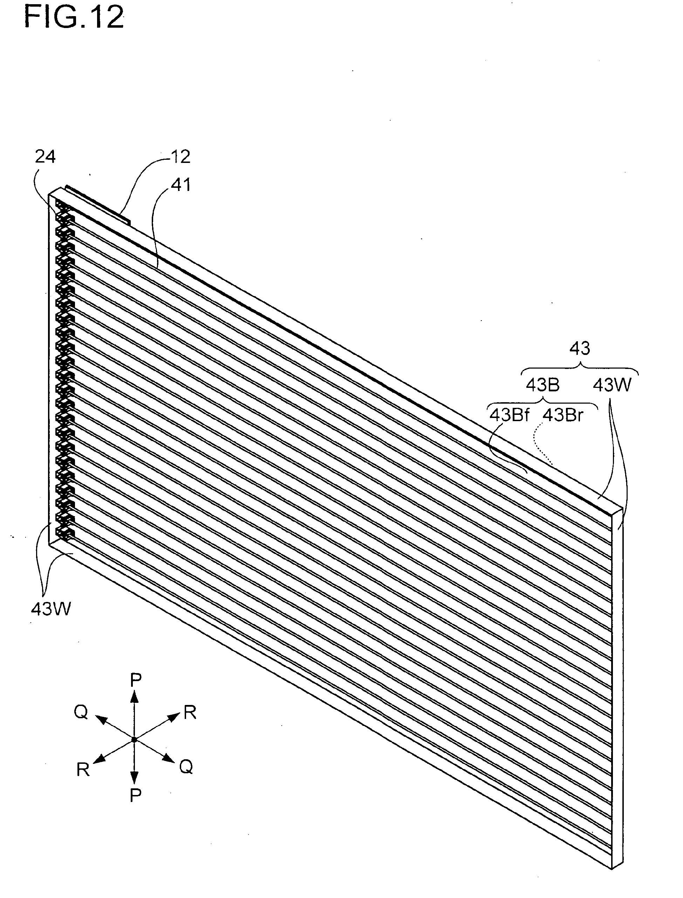

In each of Embodiments 1 to 3, the electrode (not shown) of the fluorescent tube 41 is held by the socket 31, and the harness 32 for receiving electric current supply extends out from the socket 31. The harness 32 described above, however, is not necessarily required. That is, the backlight unit 49 may also be configured so that an electrical connection between the fluorescent tube 41 and the inverter circuit is established without using the harness 32 (in a harnessless manner). The following describes a backlight unit 49 having such a configuration with reference to Figs. 12 to 19 (in these figures, for the sake of convenience, a fluorescent tube 41, an inverter board 12, and a backlight chassis 43 are mainly shown, and a reflection sheet 44 and the like are omitted).

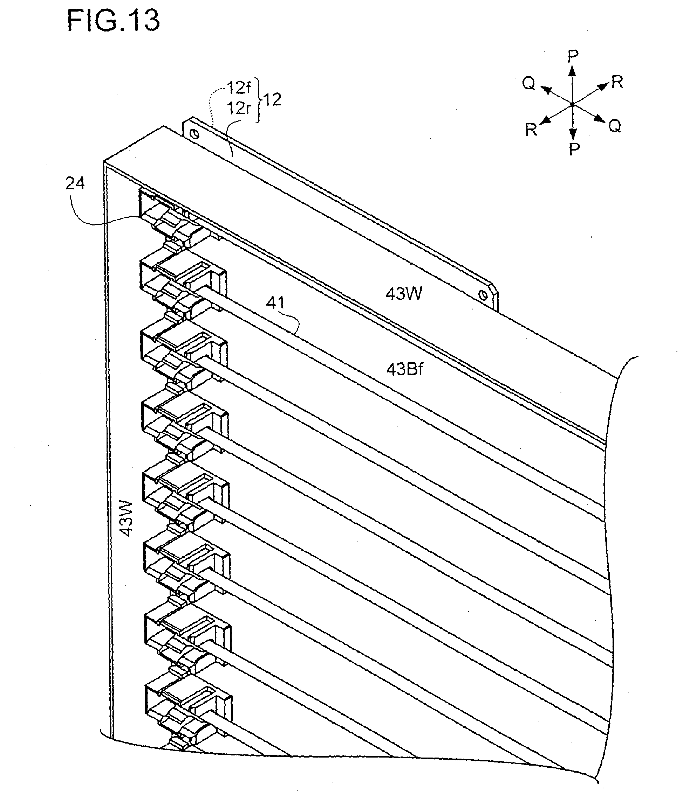

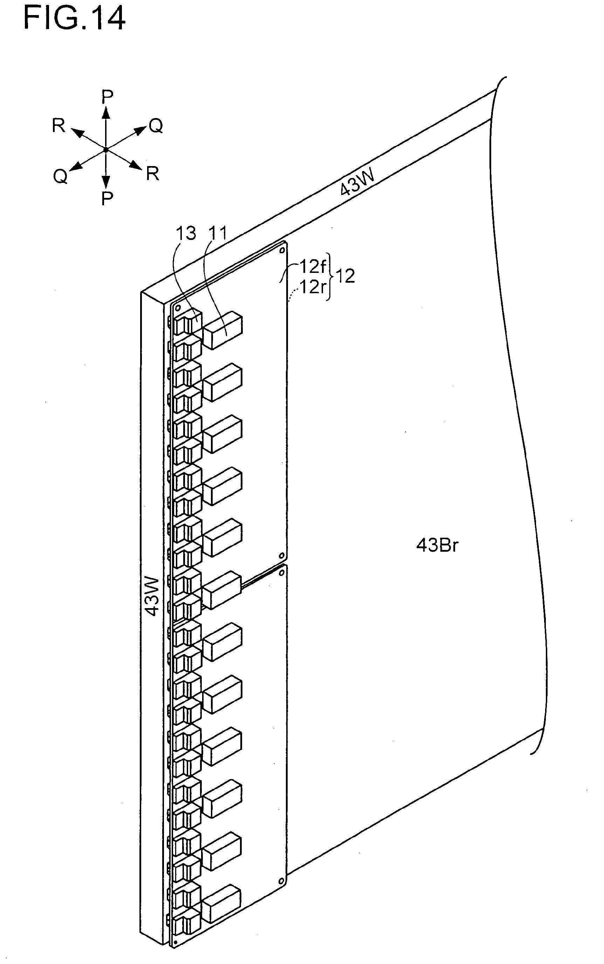

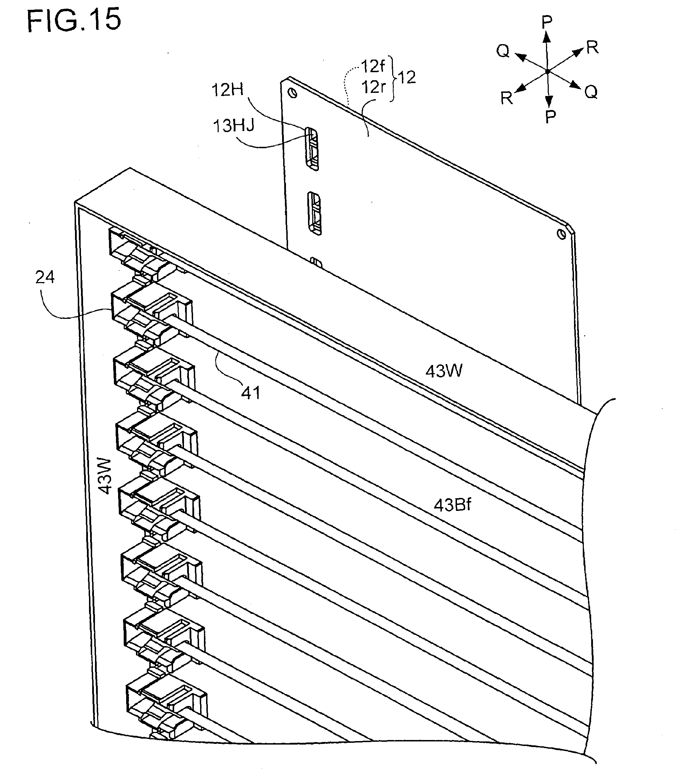

Fig. 12 is a perspective view showing the backlight chassis 43 to which the fluorescent tubes 41 are mounted and the inverter board 12. Fig. 13 is a partially enlarged view of Fig. 12, and Fig. 14 is a perspective view of the backlight chassis 43 shown in Fig. 12 as seen from the side of a rear surface 43Br. Fig. 15 is an exploded perspective view showing the backlight chassis 43 and the inverter board 12 shown in Fig. 13 in a state of being disassembled from each other.

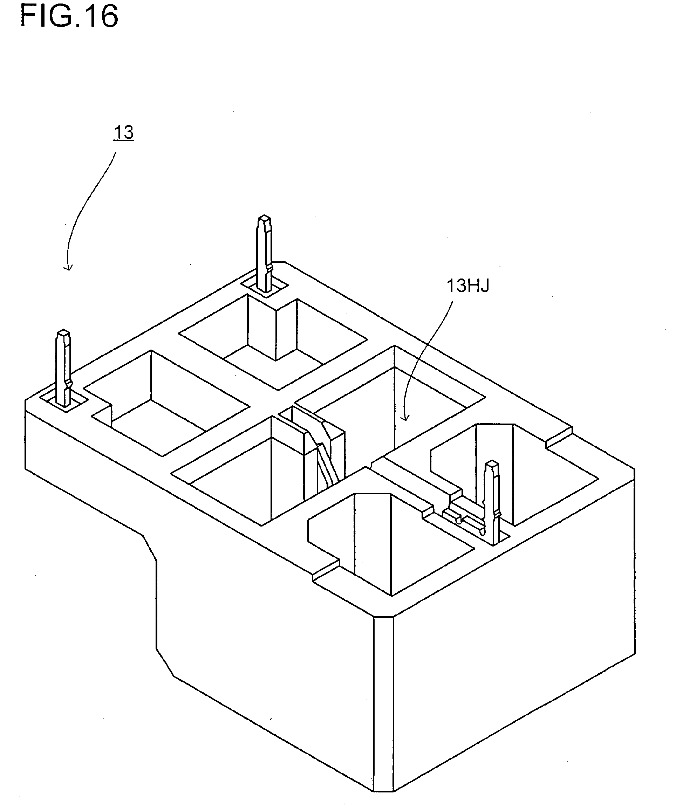

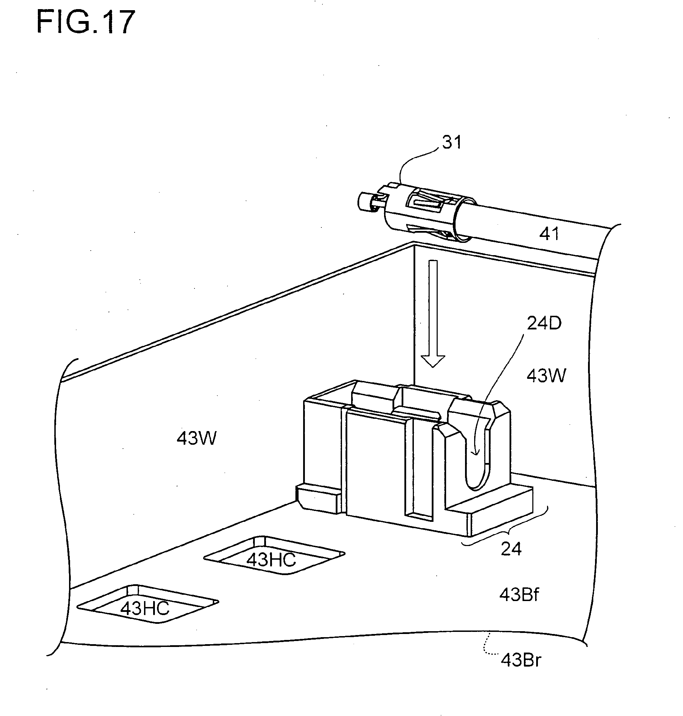

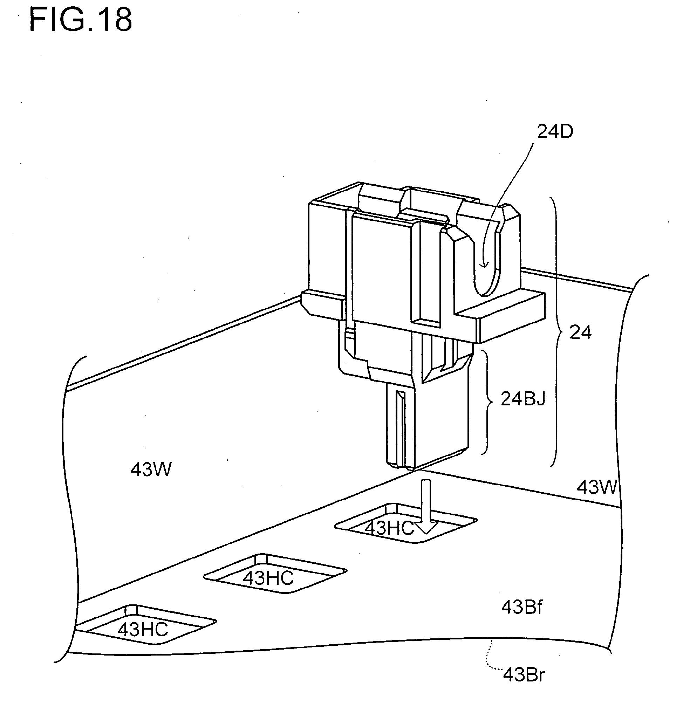

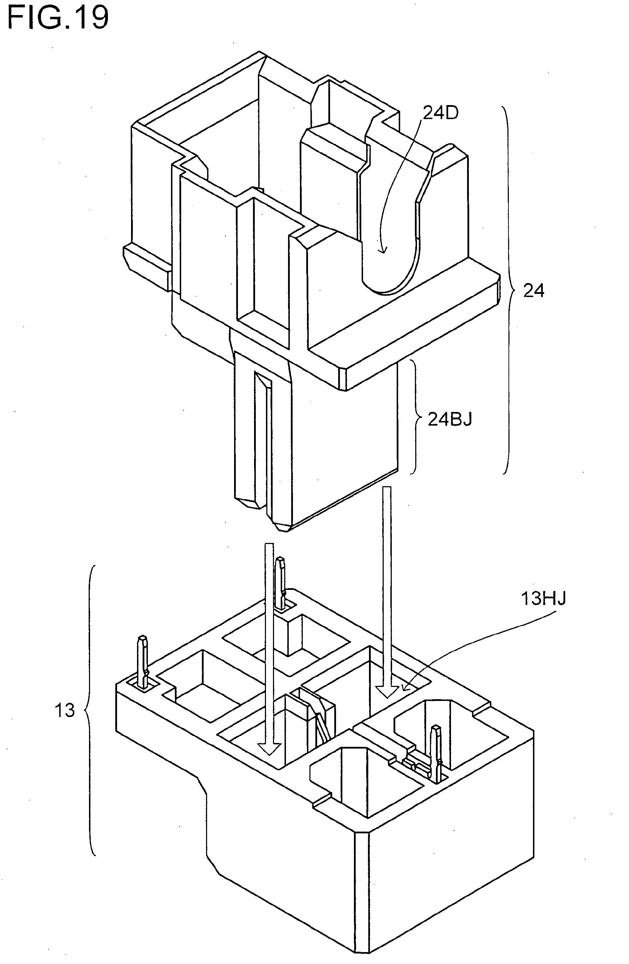

Fig. 16 is a perspective view showing only an on-board connector 13 to be installed on the inverter board 12. Fig. 17 is a perspective view showing the backlight chassis 43, one of the fluorescent tubes 41, and a harnessless connector 24 intended to hold the one of the fluorescent tubes 41. Fig. 18 is a perspective view mainly showing the backlight chassis 43 and one of the harnessless connectors 24. Fig. 19 is a perspective view showing a process in which the harnessless connector 24 is fitted to the on-board connector 13.

First, as shown in Fig. 14, similarly to Embodiments 1 to 3, the on-board connector 13 and an inverter transformer 11 are installed on the inverter board 12. In this case, however, unlike Embodiments 1 to 3, there are provided the same number of the on-board connectors 13 as the number of the fluorescent tubes 41 mounted. On the other hand, as for the inverter transformer 11, similarly to Embodiments 1 to 3, one inverter transformer 11 is provided with respect to every two fluorescent tubes 41.

As shown in Fig. 16, the on-board connector 13 includes a grooved connection portion 13HJ to be electrically connected to the harnessless connector 24. As shown in Fig. 15, the grooved connection portion 13HJ of the on-board connector 13 is exposed on a back board surface 12r of the inverter board via a board aperture 12H included in the inverter board 12.

On the other hand, as shown in Figs. 17 and 18, the harnessless connector 24 includes a holding groove 24D to which a socket 31 electrically conducting with an electrode of the fluorescent tube 41 is to be fitted, and further includes a projecting connection portion 24BJ with which the socket 31 is to be electrically conducting when held in the holding groove 24D (see Fig. 18). Furthermore, as shown in Fig. 18, the projecting connection portion 24BJ of the harnessless connector 24 is made to project to the side of the rear surface 43Br via a chassis aperture 43HC for a connector of the backlight chassis 43.

As shown in Fig. 19 (in the figure, for the sake of convenience, the backlight chassis 43 and the inverter board 12 are omitted), the projecting connection portion 24BJ of the harnessless connector 24, which projects onto the rear surface 43Br of the backlight chassis 43, and the grooved connection portion 13HJ of the on-board connector 13, which is exposed from the back board surface 12r of the inverter board 12, are brought closer to be fitted to each other. Then, an alternating current from an inverter circuit flows to the fluorescent tube 41 via board wiring (not shown), the on-board connector 13, the harnessless connector 24, and the socket 31. As a result, the fluorescent tube 41 is driven using the alternating current.

Also in the backlight unit 49 described above, in a case where the fluorescent tube 41 is driven, an alternating-current voltage of several kilovolts is applied to the inverter transformer 11. It can therefore be said that coming in contact with the inverter transformer 11 is dangerous. In order to prevent possible danger, similarly to Embodiments 1 to 3, a protection sheet PS is interposed in a gap between the inverter board 12 and the backlight chassis 43.

As can thus be understood, the backlight unit 49 of Embodiment 4 is different from the backlight unit 49 of each of Embodiments 1 to 3 only in how the connection between the fluorescent tube 41 and the inverter circuit is made. It therefore follows that the same effects as those provided by the protection sheet PS described in each of Embodiments 1 to 3 are obtained also in the backlight unit 49 (accordingly, in a liquid crystal display device 69) in Embodiment 4.

### [Other Embodiments]

The present invention is not limited to the foregoing embodiments and may be modified variously without departing from the spirit of the present invention.

For example, the protection sheet PS described in the foregoing may be made of resin alone or may be a sheet formed by laminating resin to metal. Furthermore, the protection sheet PS described in the foregoing has a single layer structure but is not limited thereto and may instead have a multiplayer structure. For example, the protection sheet PS may be formed of a layered body of two resin layers having different linear expansion coefficients (without any limitation to a layered body of two types of resin having different linear expansion coefficients, the protection sheet PS may also be formed of a layered body of three or more types of resin having different linear expansion coefficients).

Furthermore, for the purpose of increasing the freedom degree of deformation of the protection sheet PS, at least one of the front surface and the back surface of the protection sheet PS may preferably be processed beforehand. For example, one of the surfaces of the protection sheet PS may be beforehand embossed or processed so as to include a prism shape or a lenticular shape (in short, it is only required that the front surface and the back surface of the protection sheet PS be made different in area).

Furthermore, the protection sheet PS may preferably have a white, gray, or black color. For example, the protection sheet PS having a white color can reflect light, whereas the protection sheet PS having a black color absorbs light and thus prevents light leak.

### List of Reference Signs

- PS: Protection sheet (Thermally deformable sheet)
- DP: Dome portion in protection sheet
- TP: Top portion of dome portion
- FP: Foot portion in protection sheet
- SC: Semicircular columnar portion in protection sheet
- TL: Top line portion of semicircular columnar portion
- 11: Inverter transformer (Driving circuit)
- 11P: Metal terminal (Part of driving circuit)
- 12: Inverter board (Circuit board)
- 12f: Exposed board surface
- 12r: Back board surface
- 12H: Board aperture
- 13: On-board connector
- 13HJ: Grooved connection portion
- 23: Harness connection connector
- 24: Harnessless connector
- 24D: Holding groove
- 24BJ: Projecting connection portion
- 31: Socket
- 32: Harness
- 34: Screw
- 41: Fluorescent tube (Light source, Linear light source)
- 42: Lamp holder
- 43: Backlight chassis (Chassis)
- 43B: Bottom portion of backlight chassis
- 43Bf: Front surface of bottom portion
- 43Br: Rear surface of bottom portion
- 43HC: Chassis aperture for connector
- 44: Reflection sheet
- 44HC: Sheet aperture for connector
- 45: Diffusion sheet
- 46: Lens sheet
- 49: Backlight unit (Illuminating device, Electronic apparatus)
- 59: Liquid crystal display panel
- 69: Liquid crystal display device (Electronic apparatus)

## Claims

1. An electronic apparatus, comprising:
a circuit board on which a driving circuit is mounted; and
a chassis to which the circuit board is mounted,
wherein a thermally deformable sheet that is reversibly deformable depending on a temperature is interposed in a gap between the circuit board and the chassis, and
under a first temperature state lower than a predetermined temperature, the thermally deformable sheet is deformed into such a shape as to protect part of the driving circuit, which is exposed to the gap, whereas under a second temperature state lower than the predetermined temperature, the thermally deformable sheet is deformed into such a shape as to be separated from the part of the driving circuit, which is being protected by the thermally deformable sheet.

2. The electronic apparatus according to claim 1, wherein
under the first temperature state, the thermally deformable sheet, while a ring-shaped region as part thereof remains as a foot portion, becomes bulged at an inner side portion of the ring-shaped foot portion and thus is deformed into a dome shape, so that the part of the driving circuit is protected by a top portion of the portion defining the dome shape, and
under the second temperature state, the thermally deformable sheet becomes shrunk at the bulged portion and thus is deformed into a planar shape, so that the top portion is separated from the part of the driving circuit.

3. The electronic apparatus according to claim 1, wherein
under the first temperature state, the thermally deformable sheet, while opposed fringe regions as part thereof remain as foot portions, becomes bowed at an inner side portion between the foot portions and thus is deformed into a semicircular columnar shape, so that the part of the driving circuit is protected by a top line portion that is a linear top portion of the portion defining the semicircular columnar shape, and
under the second temperature state, the thermally deformable sheet becomes flattened at the bowed portion and thus is deformed into a planar shape, so that the top line portion is separated from the part of the driving circuit.

4. The electronic apparatus according to any one of claims 1 to 3, wherein
the thermally deformable sheet is made of resin or formed by laminating resin to metal.

5. The electronic apparatus according to any one of claims 1 to 3, wherein
the thermally deformable sheet is made of a laminate of two or more types of resin having different linear expansion coefficients.

6. The electronic apparatus according to any one of claims 1 to 3, wherein
a front surface and a back surface of the thermally deformable sheet is made different in area.

7. The electronic apparatus according to any one of claims 1 to 6, wherein
the thermally deformable sheet has a white, gray, or black color.

8. An illuminating device comprising the electronic apparatus according to any one of claims 1 to 7,
wherein the electronic apparatus includes a light source that emits light by using an electric current fed through the driving circuit.

9. A display device, comprising:
the illuminating device according to claim 8; and
a display panel that is disposed so as to be able to receive output light of the illuminating device.

10. The display device according to claim 9, wherein
the display panel is a liquid crystal panel formed by sealing in liquid crystal between a pair of substrates.

11. A television receiver comprising the display device according to claim 9 or 10.
